# EUROPÄISCHE PATENTSCHRIFT

(11) **EP 1 643 157 B1**
(45) Veröffentlichungstag und Bekanntmachung des Hinweises auf die Patenterteilung: **12.11.2014**
(21) Anmeldenummer: 04104744.0
(22) Anmeldetag: 29.09.2004
(51) Int. Cl.: F16G 1/28

(54) **Zahnriemen**
Toothed belt
Courroie dentée

(43) Veröffentlichungstag der Anmeldung: 05.04.2006
(73) Patentinhaber: ContiTech Antriebssysteme GmbH, 30165 Hannover (DE)
(72) Erfinder: Schulte, Hermann, 30823 Garbsen (DE); Teves, Reinhard, Dr., 30926 Seelze (DE); Kretzschmar, Michael, 30890 Barsinghausen (DE)
(74) Vertreter: Preusser, Andrea

(56) Entgegenhaltungen:
- WO-A-02/063081
- DE-A1- 2 258 650
- DE-A1- 10 029 470
- GB-A- 889 875

## Beschreibung

Die Erfindung betrifft einen Zahnriemen aus Gummi oder gummiähnlichem Kunststoff für Riementriebe mit zumindest einer Rückenrolle, der einen Zugstrang und ein Gewebe auf dem Zahnriemenrücken aufweist, wobei das Gewebe mit dem Riemenkörper durch einen Vulkanisationsvorgang zusammenvulkanisiert ist und wobei das Gewebe über mindestens 80 % der Riemenbreite ein achsensymmetrisches Bindungsmuster aus zwei sich rechtwinklig kreuzenden Fadensystemen aus Querfäden und dehnbaren, aus Endlosfasern gedrehten Längsfäden aufweist, wobei die Symmetrieachse des Bindungsmusters auf dem Riemenrücken zwischen den seitlichen Kanten des Riemenrückens liegt und ihre Richtung um einem Winkel von nicht mehr als 5° von der Richtung der Kanten abweicht und wobei die Längsfäden des Gewebes parallel zu der Symmetrieachse verlaufen.

Um dem Abrieb an Riemenflanken eines Zahnriemens durch das seitliche Anrollen an Führungsrollen oder Bordscheiben entgegenzuwirken ist es bekannt, den Zahnriemenrücken mit Gewebe zu versehen. Man setzt dazu bevorzugt Gewebe ein, die eine genügend hohe Dichte von Fäden enthalten, die mehr oder weniger senkrecht zu den Riemenflanken verlaufen, um den Abrieb möglichst weit zu minimieren. So beschreibt z. B. die EP 0 571 887 A1 einen Zahnriemen mit gewinkelt angeordneten Zahnreihen, der zur Erhöhung der Quersteifigkeit auf dem Riemenrücken quer oder schräg verlaufende Verstärkungsfäden besitzt.
Als Rückengewebe können dabei auch einfache Gewebe mit einer Leinwandbindung oder mit einfachen Ableitungen der Leinwandbindung (z. B. Panamabindung oder Ripsbindung) z. B. aus Baumwolle verwendet werden, die sowohl mit den Schussfäden in Riemenlängsrichtung als auch unter einem Winkel von beispielsweise 45° zur Längsrichtung auf den Riemenrücken aufgelegt werden können. In diesem Zusammenhang sei zu den in dieser Schrift genannten Bindungsarten beispielsweise auf die Brockhaus Enzyklopädie in vierundzwanzig Bänden, F. A. Brockhaus, 19. Auflage, Mannheim, 1987, Band 3, S. 330 verwiesen; dort wird ein rascher Überblick über die verschiedenen Bindungen in der Weberei und deren Patronen vermittelt. Die Gewebe mit Leinwandbindung bzw. mit einfachen Ableitungen der Leinwandbindung haben sich aber für die Rücken heutiger Hochleistungszahnriemen, die nicht nur über Riemenscheiben, sondern auch über Rücken- bzw. Spannrollen laufen, nicht durchgesetzt, da diese Gewebetypen in Riemenlängsrichtung eine zu geringe Dehnbarkeit und eine zu hohe Zugsteifigkeit besitzen. Der Riemen wird dadurch zu steif und eine hinreichend hohe Biegewilligkeit ist nicht mehr gegeben.

Besser geeignet als die einfachen Gewebe mit Leinwandbindung aus z. B. Baumwolle für die Ausrüstung des Riemenrückens sind Stretchgewebe, die Längsfäden aus permanent elastischen Kräuselfäden oder ―garnen (Stretchgarnen) oder aus in sich elastischen Materialien, wie z. B. elastischem Polyurethan, beispielsweise Elasthan® oder Dorlastan®, aufweisen. Diese Stretchgewebe werden schon seit langem erfolgreich für die Abdeckung der Zähne von Zahnriemen verwendet. Die Bindungsart dieser Stretchgewebe ist im Allgemeinen eine Köperbindung, das heißt die Bindungspunkte in diesem Bindungsmuster steigen in einer ununterbrochenen Diagonalen auf und bilden den so genannten Köpergrat. Bei Köpergeweben sind hohe Fadendichten möglich, so dass diese Gewebe eine hohe Festigkeit und Strapazierfähigkeit aufweisen. Die Gewebe werden so auf dem Riemenrücken angeordnet, dass die Längsfäden (Schussfäden) im Wesentlichen in Riemenlängsrichtung verlaufen, wodurch der Riemen eine ausreichende Biegewilligkeit erhält. Eine hohe Querfadendichte (Kettfadendichte) wirkt sich dabei besonders positiv auf die Kantenabriebbeständigkeit aus.
Aus dem deutschen Gebrauchsmuster DE-GM 83 34 233 ist es z. B. bekannt, die Rückenfläche von Zahnriemen mit einem Stretchgewebe zu versehen, welches aus dauerhaft metallisierten Fasern aufgebaut ist. Derartige Riemen sollen eine dauerhafte und zuverlässige oberflächliche elektrische Leitfähigkeit gewährleisten.

Bei Zahnriemen mit konventionellen Stretchgeweben mit einer Köperbindung auf dem Riemenrücken wurde allerdings festgestellt, dass diese Riemen bei Verwendung von Rückenrollen bei bestimmten Motordrehzahlen die nachteilige Tendenz zeigen, von den Zahnriemenscheiben seitlich abzulaufen. Es erhöht sich dadurch bei Anwesenheit von Führungsrollen oder Bordscheiben der Abrieb an den Flanken des Riemens bzw. bei Triebkonstruktionen mit wenigen oder ohne Führungsrollen oder Bordscheiben kann es sogar dazu kommen, dass der Riemen vollends von der Zahnriemenscheibe läuft.

Um die Tendenz zum Ablaufen von den Zahnriemenscheiben zu vermindern, wird in der DE 100 29 470 C2 ein Zahnriemen gemäß dem Oberbegriff des Anspruchs 1 beschrieben, der ein Rückengewebe mit einem in Riemenlängsrichtung achsensymmetrischen Bindungsmuster aufweist. Über die Drehungsrichtung der Längsfäden (Schussfäden) wird keine Aussage gemacht. Üblicherweise liegen in den dort beschriebenen achsensymmetrischen Geweben Längsfäden mit einheitlicher Drehungsrichtung vor. Das Bindungsmuster des Gewebes auf dem Riemenrücken ist über mindestens 80 % der Riemenbreite achsensymmetrisch zu einer Symmetrieachse, die auf dem Riemenrücken zwischen dessen Kanten liegt. Ein achsensymmetrisches Bindungsmuster bedeutet dabei, dass die Verläufe der Quer- und Längsfäden und damit auch deren Kreuzungspunkte achsensymmetrisch zu der Symmetrieachse sind. Da das Gewebe im Allgemeinen mit dem Wickelrohling der Zahnriemen vulkanisiert wird, wodurch man eine gute Haftung zwischen Riemenkörper und Rückengewebe erreicht, und anschließend die Riemen vom Wickel mit unterschiedlicher Breite abgestochen werden, kommt es häufig vor, dass das aufliegende Gewebe nicht über die gesamte Riemenbreite (100 %) achsensymmetrisch zu der Symmetrieachse zwischen den Kanten ist. Das Gewebe wird beim Abstechen der Riemen nämlich nicht immer so geschnitten, dass genau vollständige oder genau halbierte Bindungsrapporte durch den Schnitt an den Kanten zum Liegen kommen. Ein Bindungsrapport umfasst dabei gemäß der Bindungslehre aus der Weberei die Mindestanzahl der Kreuzungen von Quer- und Längsfäden (Kett- und Schussfäden), die in Quer- und Längsrichtung in unterbrochener Reihenfolge aneinander gefügt das Gesamtbild der Gewebebindung bestimmen. Beim Rückengewebe des Zahnriemens gemäß der DE 100 29 470 C2 sind aber Bindungsmuster und Fadendicke der Längsfäden derart aufeinander abgestimmt, dass über mindestens 80 % der Riemenbreite ein achsensymmetrisches Bindungsmuster trotz beliebiger Schnittkanten vorliegt.

In der Patentschrift GB 889 875 wird ein Antriebsriemen mit Textilauflage in Form eines Gewebes beschrieben, wobei das Gewebe mit abwechselnd vorliegenden Längsfäden mit S-Drehung und Längsfäden mit Z-Drehung aufgebaut ist.

In der Offenlegungsschrift DE 22 58 650 A1 wird ein Fördergurt mit einem eingebetteten Festigkeitsträger in Form eines Gewebes mit abwechselnd vorliegenden Längsfäden mit S-Drehung und Längsfäden mit Z-Drehung vorgestellt. Ein derartiges eingebettetes Festigkeitsträgerkonzept für Elastomerprodukte, beispielsweise für Fördergurte, Schläuche und Reifen, wird ergänzend in der Offenlegungsschrift WO 02/063081 A1 beschrieben.

Der vorliegenden Erfindung liegt nun die Aufgabe zugrunde, bei einem Zahnriemen mit Rückengewebe die Tendenz zum Ablaufen von Zahnriemenscheiben weiter zu verringern.

Gelöst wird diese Aufgabe dadurch, dass das Gewebe auf dem Zahnriemenrücken Längsfäden mit S-Drehung (4) und Längsfäden mit Z-Drehung (3) aufweist.

S-Drehung liegt vor, wenn bei senkrecht gehaltenem Faden die Endlosfasern parallel zum Schrägbalken des Buchstabens S verlaufen. Analog liegen bei Z-Drehung die Fasern parallel zum Schrägbalken des Buchstabens Z. Längsfäden sind dabei die Fäden, die in Längsrichtung des Riemens verlaufen.

Der Grundgedanke der Erfindung ist darin zu sehen, dass man herausgefunden hat, dass für die Ablauftendenz von Zahnriemen, die an zumindest einer Rückenrolle vorbeilaufen, nicht nur das Bindungsmuster verantwortlich ist, sondern auch die Drehungsrichtung der Längsfäden, die im Wesentlichen in Riemenumfangsrichtung verlaufen. Dieser Effekt ist vermutlich darin zu begründen, dass die dehnbaren Längsfäden auf dem Riemenrücken immer ein wenig aus der Oberfläche des Riemens herausschauen und daher durch ihre Drehungsrichtung eine gewisse Vorzugsrichtung beim Vorbeilaufen an Scheiben vorgeben. Weisen alle Längsfäden dieselbe Drehungsrichtung auf, so ist diese Vorzugsrichtung schräg zur Riemenumfangsrichutung, nämlich in Richtung des Schrägbalkens des Buchstabens der vorliegenden Drehungsrichtung. Liegen dagegen Längsfäden mit S- und Z-Drehung im Riemenrückengewebe vor, wird die Ablauftendenz vermindert oder sogar aufgehoben, da sich die Wirkung der S- und Z-gedrehten Fäden teilweise, bei gleicher Anzahl S- und Z-gedrehter Fäden sogar ganz, aufhebt.

Dadurch, dass die Tendenz zum Ablaufen von den Riemenscheiben bei den erfindungsgemäßen Zahnriemen unterbleibt, wird vorteilhafterweise verhindert, dass der Riemen einen erhöhten Abrieb an den Flanken beim Vorbeilaufen an Führungsrollen oder Bordscheiben zeigt. Der erfindungsgemäße Zahnriemen läuft gerade und verkantet nicht, so dass er nicht verstärkt seitlich an Führungsrollen oder Bordscheiben anrollt. Besitzt der Riementrieb keine oder nur wenige Führungsrollen und Bordscheiben, kann mit dem erfindungsgemäßen Zahnriemen verhindert werden, dass der Riemen in seiner Gesamtheit von der Riemenscheibe läuft.

Gemäß einer vorteilhaften Weiterbildung der Erfindung ist über die Riemenbreite die Anzahl der Längsfäden mit S-Drehung gleich der Anzahl der Längsfäden mit Z-Drehung ± 30 %. Durch diese Verteilung von Längsfäden mit S-Drehung und Längsfäden mit Z-Drehung im Riemenrücken wird die Ablauftendenz der Riemen besonders gut reduziert.

Die Längsfäden mit S-Drehung und die Längsfäden mit Z-Drehung liegen bevorzugt als regelmäßiges Muster vor. Beispielsweise können immer ein, zwei, drei, vier usw. Fäden gleicher Drehungsrichtung neben entsprechend gleich vielen Fäden der anderen Drehungsrichtung liegen, worauf dann wieder ein, zwei, drei, vier usw. Fäden der anderen Drehungsrichtung folgen. Gewebe mit einem solchem Aufbau lassen sich einfach herstellen und gewährleisten einen guten Riemenlauf. Es handelt sich dabei um Gewebe, die einen möglichst hohen Grad an Symmetrie zum einen durch das Bindungsmuster und zum anderen durch die Anordnung von S- und Z-gedrehten Längsfäden aufweisen. Besonders bevorzugt ist, wenn die Längsfäden mit S-Drehung und die Längsfäden mit Z-Drehung abwechselnd (ein S-gedrehter, ein Z-gedrehter, ein S-gedrehter, usw.) vorliegen.

Bei den Zahnriemen kann durch die Verwendung eines Gewebes mit einer Bruchdehnung in Riemenlängsrichtung von mehr als 50 % und einem Spannungswert bei 5 % Dehnung, welcher in Riemenquerrichtung mindestens dreimal so hoch ist wie in Riemenlängsrichtung, eine hohe Biegewilligkeit und Dehnfähigkeit des Riemens erreicht werden. Ein hoher Spannungswert des Gewebes bei 5 % Dehnung in Riemenquerrichtung bewirkt gleichzeitig, dass die Flanken des Riemens vor Abrieb geschützt werden, und die Riemen weisen eine gute Dauerhaltbarkeit auf.

Die Bruchdehnung und der Spannungswert (Kraft pro Anfangsquerschnitt) bei 5 % Dehnung werden in einem einfachen Zugversuch mit einer Zugprüfmaschine bei Dehnung mit konstanter Vorschubgeschwindigkeit der ziehenden Einspannklemme bei Raumtemperatur ermittelt. Der in die Einspannklemmen eingebrachte Gewebestreifen hat eine Breite von 10 mm und die Einspannlänge beträgt z. B. 10 mm. Das Gewebe wird beispielsweise mit seiner Gummieinbettung aus dem fertigen Riemen herauspräpariert, entsprechend geschnitten und mit Hilfe dieses Streifens werden die Bruchdehnung und der Spannungswert bestimmt. Zu den Begriffen für den einfachen Zugversuch bei der Prüfung von Textilien s. DIN 53 815.

Die Herstellung von Zahnriemen erfolgt im Allgemeinen so, dass auf einen als Form bezeichneten Stahlzylinder mit entsprechenden Längsrillen für die Zähne nacheinander Schichten aus dem Zugstrang, einer Kautschukmischungsplatte und einem Rückengewebestrumpf aufgelegt bzw. aufgezogen werden. Handelt es sich um einen Zahnriemen, dessen Zähne ebenfalls mit einem Gewebe bedeckt sind, wird vor dem Auflegen der bereits genannten Schichten noch ein Gewebestrumpf im Allgemeinen aus einem Polyamid-Stretchgewebe mit Köperbindung, welches mit einer Haft-Imprägnierlösung, üblicherweise eine Resorcin-Formaldehyd-Latex-Imprägnierlösung, behandelt ist, auf die Form gezogen. Zusätzlich können die Stretchgewebe mit geeigneten Gummilösungen, wie z. B. einer Lösung aus der Mischung, die im Riemen unter dem Gewebe liegt, präpariert sein. Die "bewickelte" Form wird mit einer Manschette überzogen und in einen Vulkanisierkessel (Autoklav) überführt, wo der Wickelrohling unter Druck vulkanisiert wird. Dabei verbindet sich das Rückengewebe mit dem Rücken des Zahnriemenwickels. Nach der Vulkanisation wird der Wickel von der Form und von der Manschette entfernt. Im Anschluss können dann von diesem Wickel Riemen in unterschiedlicher Breite abgestochen werden.
Bei dem erfindungsgemäßen Zahnriemen bietet sich der Vorteil, dass das Gewebe auf dem Zahnriemenrücken, welches üblicherweise vor der Verarbeitung ebenfalls mit einer Haft-Imprägnierlösung auf Basis von Resorcin, Formaldehyd und Kautschuklatices behandelt ist und zum Abschluss um den Wickelrohling gewickelt oder als Strumpf übergezogen wird, die Funktion der Abfuhr von bei der Vulkanisation entstehenden Gasen übernimmt. Ein zusätzliches Papiervlies zur Übernahme dieser Funktion muss bei der Herstellung des Riemens nicht mehr aufgelegt werden.

Da die Querfäden des Gewebes auf dem Riemenrücken senkrecht zur Symmetrieachse des Bindungsmusters verlaufen, erhält man eine genügend hohe Dichte von Fäden, die sich im Wesentlichen senkrecht zu den Riemenflanken erstrecken. Dies bewirkt einen hohen Spannungswert bei 5 % Dehnung in Riemenquerrichtung und trägt auch dazu bei, dass die Flanken des Riemens gegen Abrieb geschützt werden. Eine ausreichende Quersteifigkeit ist dadurch ebenfalls gesichert. Für die Ablauftendenz des Riemens spielt die Drehungsrichtung der Querfäden keine Rolle.

Gemäß einer vorteilhaften Weiterbildung der Erfindung handelt es sich bei dem Gewebe auf dem Riemenrücken um ein Gewebe, welches als Längsfäden Polyamid-Stretchfäden enthält. Derartige Gewebe zeichnen sich durch gute Wärme- und Abriebbeständigkeit aus und sind preiswert. Bei den Polyamid-Stretchfäden handelt es sich beispielsweise um gekräuselte Polyamidfäden.

Alternativ zu einem Gewebe mit Polyamid-Stretchfäden als Schussfäden kann auch ein Gewebe mit Längsfäden aus einem in sich elastischen Material, beispielsweise aus elastischem Polyurethan, wie z. B. Elasthan® oder Dorlastan®, verwendet werden. Diese Gewebe bieten den Vorteil, dass sie stabiler gegenüber dynamischer Dauerbiegebelastung sind als Gewebe mit gekräuselten Polyamid-Stretchfäden.

Bei den Bindungstypen für das Rückengewebe kann es sich z. B. um eine Leinwandbindung, eine Ripsbindung oder eine Fischgratbindung handeln. Gemäß einer bevorzugten Ausführungsform der Erfindung weist das Gewebe auf dem Riemenrücken eine Panamabindung auf. Dieser Bindungstyp verbindet eine hohe Fadendichte mit einer geringen Rapportbreite. Die Fadendichte ist höher als bei einer Leinwandbindung und die größere Fadenlänge, bis der Faden wieder die Gewebeseite wechselt, wirkt sich positiv auf die Dehnfähigkeit des Gewebes aus. Die im Vergleich zu Gewebe mit Köperbindungen geringe Rapportbreite ermöglicht es, dass das Bindungsmuster des Gewebes auf dem Riemenrücken über mindestens 80 % der Riemenbreite achsensymmetrisch ist.

Damit das Gewebe auf dem Riemenrücken die Ablauftendenz effektiv verhindert und gleichzeitig andere Riemeneigenschaften, wie z. B. die Biegewechselbeständigkeit oder das Geräuschverhalten, und die Riemendicke nicht nachteilig beeinflusst werden, hat es sich als sinnvoll herausgestellt, dass das Gewebe nicht dicker als 1,2 mm und nicht dünner als 0,7 mm ist. Ist das Gewebe dicker als 1,2 mm, wird es auf dem Riemenrücken zu stark überdehnt, was letztendlich zu einem Ausfall des Riemens führen kann. Außerdem wird der Riemen durch zu dickes Gewebe schwerer und teurer. Ist das Gewebe hingegen dünner als 0,7 mm, hat man durch die geringe Menge an aufliegendem Material Einbußen in der Kantenabriebbeständigkeit hinzunehmen.

Für eine ausreichende Haftung des Gewebes am Gummikörper des Zahnriemens ist das Gewebe vorteilhafterweise vor der Weiterverarbeitung in der Zahnriemenherstellung mit einer Haft-Imprägnierlösung auf Basis von Resorcin, Formaldehyd und Kautschuklatices, einem so genannten RFL-Dip, behandelt worden.

Bei der üblichen Ausführung von Zahnriemen befindet sich auch auf den Zähnen des Riemens ein Gewebe, im Allgemeinen ein Stretchgewebe mit Köperbindung z. B. aus Polyamid, um die Haltbarkeit des Zahnriemens zu erhöhen. Das Gewebe auf den Zähnen schützt die Zähne vor Abrieb bzw. einem Abscheren bei den auftretenden Kräften und erhöht die Zahnsteifigkeit, so dass ein Überspringen von Zähnen bei hohen Drehmonenten verhindert werden kann. Auch der geringe Reibbeiwert von Geweben im Vergleich zu Gummi trägt dazu bei, die Verschleißbeständigkeit der Zähne zu verbessern.

Im Folgenden wird die Erfmdung anhand eines Ausführungsbeispiels im Zusammenhang mit den nachstehenden Figuren näher erläutert, ohne dass die Erfindung jedoch auf diese Beispiele beschränkt ist.
Fig. 1 zeigt Bindungspatronen von möglichen Rückengeweben.
Fig. 2 zeigt schematisch den Ausschnitt einer Panamabindung mit Längsfäden, die S- und Z-gedreht sind.
Fig. 3 zeigt schematisch einen Ausschnitt aus einem Riementrieb.

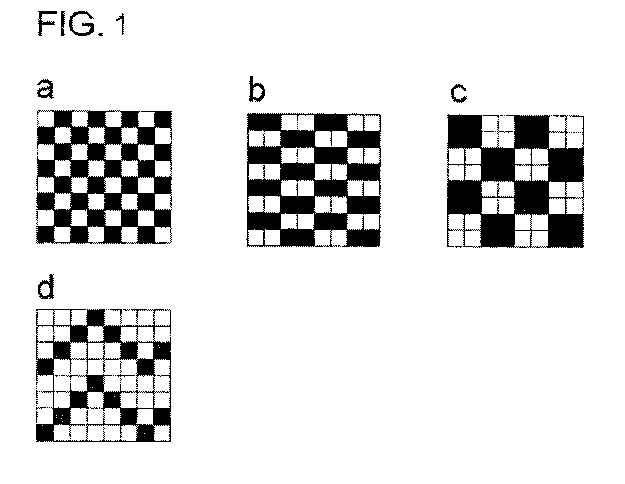

In Fig. 1 sind Bindungspatronen von einigen Geweben dargestellt, die als Rückengewebe auf den erfindungsgemäßen Zahnriemen verwendet werden können.
Eine "Bindungspatrone" ist die dem Textilfachmann geläufige Darstellungsweise eines Gewebeaufbaus. In diesem Zusammenhang sei wiederum z. B. auf die Brockhaus Enzyklopädie in vierundzwanzig Bänden, F. A. Brockhaus, 19. Auflage, Mannheim, 1987, Band 3, S. 330 verwiesen. Jede Spalte einer Bindungspatrone entspricht einem Querfaden und jede Zeile einem Längsfaden. Ist das Kreuzungsquadrat einer bestimmten Spalte und einer bestimmten Zeile schwarz gezeichnet, so überläuft dort der bestimmte Querfaden den bestimmten Längsfaden; ist das Kreuzungsquadrat einer bestimmten Spalte und einer bestimmten Zeile hingegen weiß gezeichnet, so unterläuft dort der bestimmte Querfaden den bestimmten Längsfaden. Die Bindungspatrone la ist die einer Leinwandbindung, 1b ist die einer Ripsbindung, 1c ist die einer Panamabindung und 1d ist die einer Fischgratbindung.

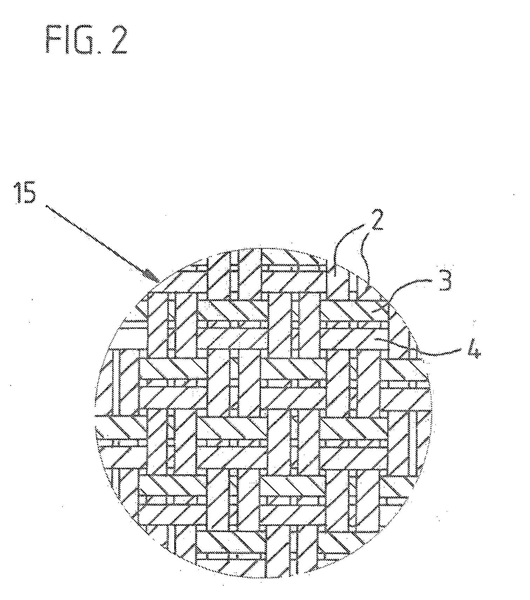

In Figur 2 ist der Ausschnitt eines Rückengewebes 15 mit Panamabindung dargestellt. Die Querfäden 2 sind allesamt Z-gedreht. Die einen Längsfäden 3 sind Z-gedreht, während die anderen Längsfäden 4 S-gedreht sind. S- und Z-gedrehte Längsfäden wechseln sich ab.

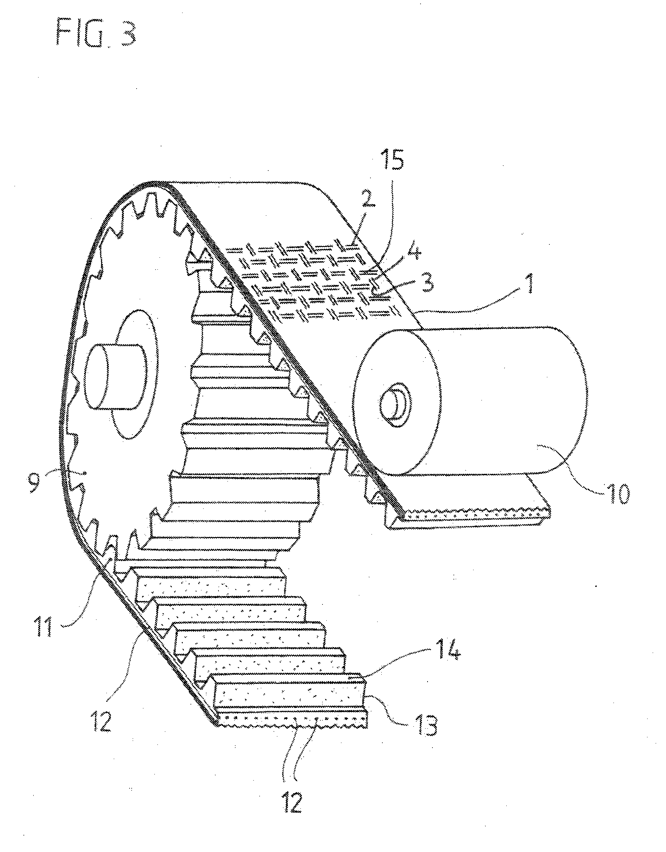

Fig. 3 zeigt einen Ausschnitt aus einem Riementrieb mit einem erfindungsgemäßen Zahnriemen 1, der an einer Zahnscheibe 9 und einer Rückenrolle 10 (Spann- oder Umlenkrolle) vorbeiläuft. Der Riemen ist aufgebaut aus einem Gummikörper 11 mit einem Zugstrang 12, einem die Zähne 13 abdeckenden Gewebe 14 und einem Gewebe 15 auf dem Riemenrücken. Bei dem Gewebe 15 handelt es sich um Stretchgewebe mit Panamabindung. Dieses Gewebe 15 kann beispielsweise ein Polyamidgewebe der Dicke 1,04 mm sein, wobei die Querfäden eine Feinheit von 235 dtex aufweisen und die Längsfäden gekräuselte Polyamidfäden aus sechs Einzelfäden (Einzelfasern) mit je einer Feinheit von 78 dtex sind. S- und Z-gedrehte Längsfäden liegen abwechselnd nebeneinander vor. Das Bindungsmuster ist über mindestens 80 % der Riemenbreite achsensymmetrisch zu einer Symmetrieachse, die parallel zu den Riemenkanten verläuft, und die Längsfäden verlaufen parallel zur Symmetrieachse.

Es wurden Zahnriemen mit Rückengeweben aus einem Stretchgewebe mit Panamabindung aus Polyamid PA 6.6 und unterschiedlichen Längsfäden-Anordnungen hergestellt. Das Gewebe eines Riemens A wies nur Längsfäden mit S-Drehung auf, während das Rückengewebe eines zweiten Riemens B abwechselnd S- und Z-gedrehte Längsfäden aufwies. Die Gewebe wurden mit einem RFL-Dip behandelt und die Herstellung der Riemen erfolgte auf die bereits im Vorhergehenden beschriebene Weise. Die Gewebe wurden in allen Fällen so aufgelegt, dass die Längsfäden im Wesentlichen parallel zu den Riemenkanten verliefen. Derartige Riemen wurden in einem Fahrzeug mit Otto-Motor eingebaut und die Laufleistung des Riemens im Fahrbetrieb untersucht. Während der Riemen A schon nach weniger als 100000 km Fahrleistung eine erhöhte Ablauftendenz und Kantenverschleiß durch ein Schieflaufen des Riemens zeigte, zeigt der erfindungsgemäße Riemen B nach über 150000 km noch keine Ablauftendenz und deutlich verringerten Kantenabrieb.

### Bezugszeichenliste

- 1: Zahnriemen
- 2: Querfäden
- 3: Längsfäden, Z-gedreht
- 4: Längsfäden, S-gedreht
- 9: Zahnscheibe
- 10: Rückenrolle
- 11: Gummikörper
- 12: Zugstrang
- 13: Zähne
- 14: Zähne abdeckendes Gewebe
- 15: Stretchgewebe auf dem Riemenrücken

## Patentansprüche

1. Zahnriemen (1) aus Gummi oder gummiähnlichem Kunststoff für Riementriebe mit zumindest einer Rückenrolle (10), der einen Zugstrang (12) und ein Gewebe (15) auf dem Zahnriemenrücken aufweist,
wobei das Gewebe (15) mit dem Riemenkörper durch einen Vulkanisationsvorgang zusammenvulkanisiert ist,
wobei das Gewebe (15) über mindestens 80 % der Riemenbreite ein achsensymmetrisches Bindungsmuster aus zwei sich rechtwinklig kreuzenden Fadensystemen aus Querfäden (2) und dehnbaren, aus Endlosfasern gedrehten Längsfäden (3, 4) aufweist, wobei die Symmetrieachse des Bindungsmusters auf dem Riemenrücken zwischen den seitlichen Kanten des Riemenrückens liegt und ihre Richtung um einem Winkel von nicht mehr als 5° von der Richtung der Kanten abweicht und wobei die Längsfäden (3, 4) des Gewebes (15) parallel zu der Symmetrieachse verlaufen,
**dadurch gekennzeichnet, dass** das Gewebe (15) Längsfäden mit S-Drehung (4) und Längsfäden mit Z-Drehung (3) aufweist.

2. Zahnriemen nach Anspruch 1, **dadurch gekennzeichnet, dass** über die Riemenbreite die Anzahl der Längsfäden mit S-Drehung (4) gleich der Anzahl der Längsfäden mit Z-Drehung (3) ± 30 % ist.

3. Zahnriemen nach Anspruch 1 oder 2, **dadurch gekennzeichnet, dass** die Längsfäden mit S-Drehung (4) und die Längsfäden mit Z-Drehung (3) als regelmäßiges Muster vorliegen.

4. Zahnriemen nach Anspruch 3, **dadurch gekennzeichnet, dass** die Längsfäden mit S-Drehung (4) und die Längsfäden mit Z-Drehung (3) abwechselnd vorliegen.

5. Zahnriemen nach zumindest einem der vorhergehenden Ansprüche, **dadurch gekennzeichnet, dass** die Längsfäden (3, 4) gekräuselte Polyamid-Stretchfäden sind.

6. Zahnriemen nach zumindest einem der vorhergehenden Ansprüche, **dadurch gekennzeichnet, dass** die Bindung des Gewebes (15) auf dem Riemenrücken eine Panamabindung ist.

## Claims

1. Toothed belt (1) of rubber or rubber-like plastic for belt drives, comprising at least one return roller (10), which has a tension strand (12) and a woven fabric (15) on the back of the toothed belt, the woven fabric (15) being vulcanized together with the body of the belt by a vulcanizing process, the woven fabric (15) having over at least 80% of the width of the belt an axially symmetrical weave pattern comprising two systems of threads crossing one another at right angles and comprising transverse threads (2) and extensible longitudinal threads (3, 4) twisted from continuous fibres, the axis of symmetry of the weave pattern on the back of the belt lying between the lateral edges of the back of the belt and the direction thereof deviating from the direction of the edges by an angle of no more than 5°, and the longitudinal threads (3, 4) of the woven fabric (15) running parallel to the axis of symmetry,
**characterized in that** the woven fabric (15) has longitudinal threads with an S-twist (4) and longitudinal threads with a Z-twist (3).

2. Toothed belt according to Claim 1, **characterized in that**, over the width of the belt, the number of longitudinal threads with an S-twist (4) is equal to the number of longitudinal threads with a Z-twist (3) ± 30%.

3. Toothed belt according to Claim 1 or 2, **characterized in that** the longitudinal threads with an S-twist (4) and the longitudinal threads with a Z-twist (3) take the form of a regular pattern.

4. Toothed belt according to Claim 3, **characterized in that** the longitudinal threads with an S-twist (4) and the longitudinal threads with a Z-twist (3) alternate.

5. Toothed belt according to at least one of the preceding claims, **characterized in that** the longitudinal threads (3, 4) are crimped polyamide stretch threads.

6. Toothed belt according to at least one of the preceding claims, **characterized in that** the weave of the woven fabric (15) on the back of the belt is a panama weave.

## Revendications

1. Courroie dentée (1) en caoutchouc ou en matière plastique de type caoutchouc destinée à des entraînements par courroie avec au moins un rouleau dorsal (10), qui présente un brin de traction (12) et un tissu (15) sur le dos de la courroie dentée,
dans laquelle le tissu (15) est assemblé par vulcanisation au corps de la courroie par une opération de vulcanisation,
dans lequel le tissu (15) présente sur au moins 80 % de la largeur de la courroie un dessin d'armure à symétrie axiale composé de deux systèmes de fils se croisant à angle droit en fils transversaux (2) et en fils longitudinaux (3, 4) extensibles tordus à partir de fibres sans fin, dans laquelle l'axe de symétrie du dessin d'armure sur le dos de la courroie est situé entre les bords latéraux du dos de la courroie et sa direction ne diffère pas d'un angle de plus de 5° de la direction des bords et dans laquelle les fils longitudinaux (3, 4) du tissu (15) sont parallèles à l'axe de symétrie,
**caractérisée en ce que** le tissu (15) présente des fils longitudinaux à torsion S (4) et des fils longitudinaux à torsion Z (3).

2. Courroie dentée selon la revendication 1, **caractérisée en ce que**, sur la largeur de la courroie, le nombre des fils longitudinaux avec la torsion S (4) est égal au nombre des fils longitudinaux avec la torsion Z (3) ± 30 %.

3. Courroie dentée selon la revendication 1 ou 2, **caractérisée en ce que** les fils longitudinaux avec la torsion S (4) et les fils longitudinaux avec la torsion Z (3) sont présents en un dessin régulier.

4. Courroie dentée selon la revendication 3, **caractérisée en ce que** les fils longitudinaux avec la torsion S (4) et les fils longitudinaux avec la torsion Z (3) sont présents en alternance.

5. Courroie dentée selon au moins une des revendications précédentes, **caractérisée en ce que** les fils longitudinaux (3, 4) sont des fils stretch frisés en polyamide.

6. Courroie dentée selon au moins une des revendications précédentes, **caractérisée en ce que** l'armure du tissu (15) sur le dos de la courroie est une armure panama.
